# EUROPÄISCHE PATENTANMELDUNG

(11) **EP 3 828 652 A1**
(43) Veröffentlichungstag der Anmeldung: **02.06.2021**
(21) Anmeldenummer: 19211427.0
(22) Anmeldetag: 26.11.2019
(51) Int. Cl.: G05B 13/04, G05B 17/02, G05D 1/00

(54) **VERFAHREN UND TESTANORDNUNG ZUM TESTEN EINER AUTONOMEN VERHALTENSSTEUERUNG FÜR EIN TECHNISCHES SYSTEM**

(71) Anmelder: Siemens Aktiengesellschaft, 80333 München (DE)
(72) Erfinder: Geipel, Markus Michael, 80799 München (DE); Wurm, Kai, 81739 München (DE); Brucksch, Michael, 96155 Buttenheim (DE); Neidig, Jörg, 90409 Nürnberg (DE)

(57) **Zusammenfassung**

Zum Testen einer autonomen Verhaltenssteuerung (ACL) für ein technisches System (ATS) werden ein Maschinenmodell (MM) zur physikalischen Simulation des technischen Systems (ATS), ein eine Umgebung des technischen Systems (ATS) modellierendes Umgebungsmodell (EM) sowie ein potenzielle Störungen in der Umgebung modellierendes Störungsmodell (DM) eingelesen. Mittels des Störungsmodells (DM) werden Stördaten (DDE, DDM, DDT) generiert, und das Umgebungsmodell wird abhängig von den Stördaten (DDE, DDM, DDT) modifiziert. Mittels des modifizierten Umgebungsmodells (EM) und des Maschinenmodells (MM) werden dann umgebungsspezifisch simulierte Sensordaten (SSD) des technischen Systems (ATS) generiert. Abhängig von den simulierten Sensordaten (SSD) werden durch die autonome Verhaltenssteuerung (ACL) Steuerdaten (CD) für das technische System (ATS) generiert. Mittels des Maschinenmodells (MM) wird dann ein durch die Steuerdaten (CD) induziertes Betriebsverhalten des technischen Systems (ATS) simuliert. Weiterhin wird ein das Betriebsverhalten quantifizierender Performanzwert (PV) ermittelt und als Testergebnis ausgegeben.

## Beschreibung

In vielen Technologiebereichen werden in zunehmendem Maße autonome oder teilautonome technische Systeme, wie beispielsweise autonome Roboter, autonome Fahrzeuge, autonome Maschinensteuerungen oder andere autonome Maschinen eingesetzt, die vorgegebene Aufgaben zumindest teilweise selbständig erfüllen und dabei autonom agieren. Derartige technische Systeme müssen nicht für jede Aufgabe spezifisch programmiert werden, sondern können gewissermaßen als Vielzweckmaschinen aufgefasst werden, die eine Umgebung wahrnehmen und auch ihre Fähigkeiten kombinieren können, um eine vorgegebene Aufgabe zu erfüllen. Autonome Systeme können in der Regel auf Änderungen in einer Umgebung reagieren und können in vielen Fällen selbständig über von ihnen auszuführende Aktionen entscheiden.

Im Allgemeinen sind technische Systeme vor ihrem Einsatz dahingehend zu testen, ob und inwieweit sie eine vorgegebene Spezifikation erfüllen und vorgegebene Aufgaben lösen können. Ein solcher Test gestaltet sich für autonom agierende technische Systeme in der Regel schwieriger als für nicht autonome Systeme mit fest einprogrammierten Verhaltensweisen, weil eine tatsächliche Reaktion eines autonomen Systems häufig a priori nicht festgelegt ist. Erschwerend kommt hinzu, dass viele autonome Systemen durch autonome Verhaltenssteuerungen gesteuert werden, die als Blackbox-Steuerungen vertrieben werden und deren Reaktionsmechanismen nicht im Detail bekannt oder dokumentiert sind. So werden z. B. bei einem zur Verhaltenssteuerung genutzten neuronalen Netz die Reaktionsmechanismen in der Regel nicht explizit einprogrammiert, sondern anhand von Trainingsdaten gelernt.

Autonome technische Systeme werden bisher häufig durch Simulation ihres Verhaltens in simulierten Betriebsszenarien getestet. Bei derartigen, in der Regel domainspezifischen Simulationen ist es jedoch häufig schwierig, alle verhaltensrelevanten Betriebsszenarien abzudecken.

Es ist Aufgabe der vorliegenden Erfindung, ein Verfahren und eine Testanordnung zum Testen einer autonomen Verhaltenssteuerung für ein technisches System zu schaffen, mit denen sich effizientere Tests durchführen lassen.

Gelöst wird diese Aufgabe durch ein Verfahren mit den Merkmalen des Patentanspruchs 1, durch eine Testanordnung mit den Merkmalen des Patentanspruchs 8, durch ein Computerprogrammprodukt mit den Merkmalen des Patentanspruchs 9 sowie durch ein computerlesbares, vorzugsweise nichtflüchtiges Speichermedium mit den Merkmalen des Patentanspruchs 10.

Zum Testen einer autonomen Verhaltenssteuerung für ein technisches System, insbesondere für einen autonomen Roboter, für ein AGV (Automated Guided Vehicle), für eine autonome Maschinensteuerung oder für eine andere autonome Maschine werden ein Maschinenmodell zur physikalischen Simulation des technischen Systems, ein eine Umgebung des technischen Systems modellierendes Umgebungsmodell sowie ein potenzielle Störungen in der Umgebung modellierendes Störungsmodell eingelesen. Als potenzielle Störungen können insbesondere Abweichungen von einer erwarteten Umgebung, von einer Soll-Umgebung oder von anderen Rand- oder Rahmenbedingungen systematisch modelliert werden. Mittels des Störungsmodells werden Stördaten generiert, und das Umgebungsmodell wird abhängig von den Stördaten modifiziert. Mittels des modifizierten Umgebungsmodells und des Maschinenmodells werden dann umgebungsspezifisch simulierte Sensordaten des technischen Systems generiert. Abhängig von den simulierten Sensordaten werden durch die autonome Verhaltenssteuerung Steuerdaten für das technische System generiert. Mittels des Maschinenmodells wird dann ein durch die Steuerdaten induziertes Betriebsverhalten des technischen Systems simuliert. Weiterhin wird ein das Betriebsverhalten quantifizierender Performanzwert ermittelt und als Testergebnis ausgegeben. Der Performanzwert kann hierbei insbesondere einen Durchsatz, eine Betriebsgeschwindigkeit, einen Ressourcenverbrauch, eine Produktqualität, eine Präzision, eine Aufgabenerfüllung und/oder einen Verschleiß quantifizieren.

Eine erfindungsgemäße Testanordnung zum Testen einer autonomen Verhaltenssteuerung für ein technisches System verfügt über eine erste Schnittstelle zum Ankoppeln der autonomen Verhaltenssteuerung, über eine zweite Schnittstelle zum Ankoppeln eines Maschinenmodells zur physikalischen Simulation des technischen Systems, über eine dritte Schnittstelle zum Ankoppeln eines, eine Umgebung des technischen Systems modellierenden Umgebungsmodells sowie über eine vierte Schnittstelle zum Ankoppeln eines potenzielle Störungen in der Umgebung modellierenden Störungsmodells. Weiterhin weist die Testanordnung einen Stördatengenerator zum Generieren von Stördaten mittels des Störungsmodells und zum Modifizieren des Umgebungsmodells abhängig von den Stördaten auf. Darüber hinaus verfügt die Testanordnung über einen Simulator
- zum umgebungsspezifischen Simulieren und Generieren von Sensordaten des technischen Systems mittels des modifizierten Umgebungsmodells und des Maschinenmodells,
- zum Empfangen von durch die autonome Verhaltenssteuerung abhängig von den simulierten Sensordaten generierten Steuerdaten für das technische System,
- zum Simulieren eines durch die Steuerdaten induzierten Betriebsverhaltens des technischen Systems mittels des Maschinenmodells, sowie
- zum Ermitteln und Ausgeben eines das Betriebsverhalten quantifizierenden Performanzwertes.

Zum Ausführen des erfindungsgemäßen Verfahrens sind weiterhin ein Computerprogrammprodukt sowie ein computerlesbares Speichermedium vorgesehen.

Das erfindungsgemäße Verfahren, die erfindungsgemäße Testanordnung sowie das erfindungsgemäße Computerprogrammprodukt können beispielsweise mittels eines oder mehrerer Prozessoren, eines oder mehrerer Computer, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass eine autonome Verhaltenssteuerung unter systematisch generierten Störeinflüssen getestet und bewertet werden kann. Das Steuerverhalten unter Störeinflüssen ist ein wesentlicher Bewertungsmaßstab für autonome Steuerungen, insofern bei diesen naturgemäß angestrebt wird, dass sie auch unvorhergesehene Situationen oder andere Störungen bewältigen können. Ein weiterer Vorteil ist darin zu sehen, dass die verwendeten Modelle auf einfache Weise ausgetauscht oder spezifisch modifiziert werden können, um so verschiedene technische Systeme in verschiedenen Umgebungen unter verschiedenen Störeinflüssen zu testen und/oder zu vergleichen.

Vorteilhafte Ausführungsformen und Weiterbildungen der Erfindung sind in den abhängigen Ansprüchen angegeben.

Nach einer vorteilhaften Ausführungsform der Erfindung kann das Störungsmodell auch potenzielle Störungen des technischen Systems modellieren. Damit kann auch das Maschinenmodell abhängig von den Stördaten modifiziert werden. Insbesondere kann abhängig von den Stördaten ein Verhalten eines Sensors und/oder eines Aktors des technischen Systems im Maschinenmodell modifiziert werden. Mittels des modifizierten Maschinenmodells können dann die simulierten Sensordaten generiert und/oder das Betriebsverhalten simuliert werden. Als potenzielle Störungen des technischen Systems können insbesondere Abweichungen von Soll-Betriebsabläufen, Abweichungen von Soll-Funktionen, Defekte, Messungenauigkeiten, Fehlmessungen und/oder Fehljustierungen systematisch modelliert werden.

Nach einer vorteilhaften Weiterbildung der Erfindung können mehrere Modifikationen des Störungsmodells generiert oder eingelesen werden, und der Performanzwert kann für eine jeweilige Modifikation des Störungsmodells ermittelt werden. Insbesondere kann eine Modifizierung des Störungsmodells anhand des jeweiligen Performanzwertes dahingehend optimiert werden, dass eine resultierende Performanz des technischen Systems verringert wird. Unter einer Optimierung sei hierbei auch eine Annäherung an ein Optimum verstanden. Auf diese Weise können gezielt Störungen ermittelt werden, bei denen die autonome Verhaltenssteuerung bzw. das technische System versagt. Hieraus können ein Maß für eine Schädlichkeit spezifischer Störungen sowie ein Maß für eine Robustheit der autonomen Verhaltenssteuerung abgeleitet werden.

Zur Modifizierung des Störungsmodells können insbesondere Störungsmodellparameter über eine Benutzerschnittstelle eingelesen werden, gemessene oder vorgegebene Störungsmodellparameter aus einer Datenbank eingelesen werden und/oder das Störungsmodell durch ein anderes, über eine Störungsmodellschnittstelle eingelesenes Störungsmodell zumindest teilweise ersetzt werden. Weiterhin können die Störungsmodellparameter mittels eines Gamification-Verfahrens variiert werden. Mittels eines Gamification-Verfahrens kann die Variation der Störmodellparameter als Teil eines Spiels, vorzugsweise eines Online-Spiels organisiert sein, dessen Spielerfolg oder dessen Spielmotivation sich am gewünschten Optimierungsziel orientiert. Darüber hinaus können die Störungsmodellparameter mittels eines maschinellen Lernverfahrens, insbesondere eines Verfahrens des bestärkenden Lernens variiert werden. Insbesondere kann ein neuronales Netz darauf trainiert werden, dass die autonome Verhaltenssteuerung versagt.

Nach einer weiteren vorteilhaften Ausführungsform der Erfindung kann ein eine Aufgabenstellung für das technische System spezifizierendes Aufgabenmodell eingelesen werden. Das Aufgabenmodell kann dann abhängig von den Stördaten modifiziert werden, und die Steuerdaten können mittels des modifizierten Aufgabenmodells generiert werden. Auf diese Weise können auch Abweichungen oder Störungen in einer Aufgabenstellung für das technische System in systematischer Weise modelliert und beim Testen berücksichtigt werden.

Darüber hinaus können anhand von für unterschiedliche Stördaten ermittelten Performanzwerten
- eine statistische Verteilung der Performanzwerte,
- ein extremer Performanzwert, ein zugehöriges Betriebsverhalten und/oder eine zugehörige Störungsangabe,
- eine Korrelation zwischen Störungen und Performanzwerten und/oder
- eine Wahrscheinlichkeit einer Aufgabenerfüllung oder eines Ausfalls des technischen Systems
ermittelt und als Testergebnis ausgegeben werden.

Auf diese Weise kann ermittelt werden, ob und inwieweit eine Performanz des technischen Systems durch Störungen beeinflusst wird.

Ein Ausführungsbeispiel der Erfindung wird nachfolgend anhand der Zeichnung näher erläutert. Dabei zeigen jeweils in schematischer Darstellung:
- Figur 1: ein autonomes technisches System und
- Figur 2: eine erfindungsgemäße Testanordnung zum Testen einer autonomen Verhaltenssteuerung für das autonome technische System.

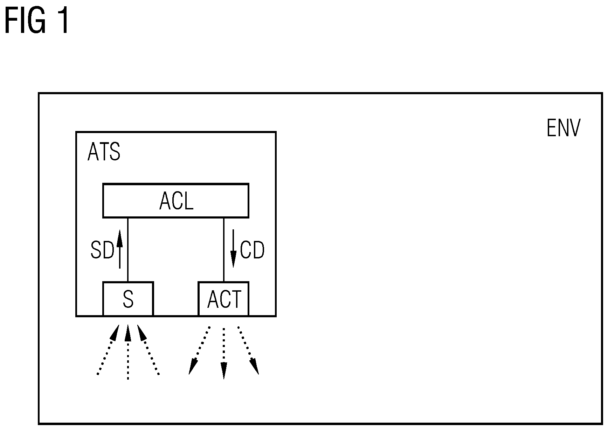

Figur 1 zeigt in schematischer Darstellung ein autonomes technisches System ATS, das autonom in einer Umgebung ENV agiert und dort vorgegebene Aufgaben weitgehend selbständig ausführt. Das autonome technische System ATS kann beispielsweise ein autonomer, insbesondere mobiler Roboter, ein autonomes Fahrzeug, eine autonome Maschinensteuerung, ein sogenanntes AGV (Automatic Guided Vehicle) oder eine andere Maschine, insbesondere eine Turingmaschine sein. Die Umgebung ENV des autonomen technischen Systems ATS kann z.B. im Falle eines Fertigungsroboters oder eines AGV eine Fabrikhalle, im Falle eines autonomen Fahrzeuges eine Verkehrsumgebung und im Falle eines Logistikroboters ein Lager sein. Die Umgebung ENV kann insbesondere auch vom autonomen technischen System ATS zu manipulierende oder zu handhabende Objekte umfassen.

Das autonome technische System ATS verfügt über eine autonome Verhaltenssteuerung ACL, die ein autonomes Verhalten des autonomen technischen Systems ATS im laufenden Betrieb steuert. Hierbei trifft die autonome Verhaltenssteuerung ACL weitgehend selbständige Entscheidungen über vom autonomen technischen System ATS auszuführende Aktionen. Derartige autonome Verhaltenssteuerungen enthalten häufig spezifisches Know-How ihres Herstellers und werden deshalb oft als Blackbox-Steuerungen implementiert und vertrieben. Dies bedingt, dass viele Implementierungsdetails solcher autonomen Verhaltenssteuerungen einem Anwender nicht bekannt sind.

Das autonome technische System ATS verfügt weiterhin über eine Sensorik S zum Detektieren und Vermessen der Umgebung ENV sowie zum Messen von Betriebsparametern des autonomen technischen Systems ATS. Die Sensorik S kann insbesondere Bildsensoren, akustische Sensoren, Beschleunigungssensoren, Kraftsensoren und/oder Bewegungssensoren umfassen. Weiterhin weist das autonome technische Systems ATS verschiedene Aktoren ACT auf, die in der Umgebung ENV wirken und/oder auf die Umgebung ENV einwirken. Die Sensorik S und die Aktoren ACT sind jeweils mit der autonomen Verhaltenssteuerung ACL gekoppelt.

Im laufenden Betrieb werden Messungen der Sensorik S in Form von Sensordaten SD quantifiziert, die von der Sensorik S zur autonomen Verhaltenssteuerung ACL übermittelt werden. Letztere wertet die übermittelten Sensordaten SD aus und entscheidet abhängig davon über vom autonomen technischen System ATS auszuführende Aktionen. Infolgedessen werden durch die autonome Verhaltenssteuerung ACL Steuerdaten CD zum Ansteuern der Aktoren ACT generiert. Die generierten Steuerdaten CD werden von der autonomen Verhaltenssteuerung ACL zu den Aktoren ACT übermittelt und veranlassen diese die geplanten Aktionen des autonomen technischen Systems ATS auszuführen.

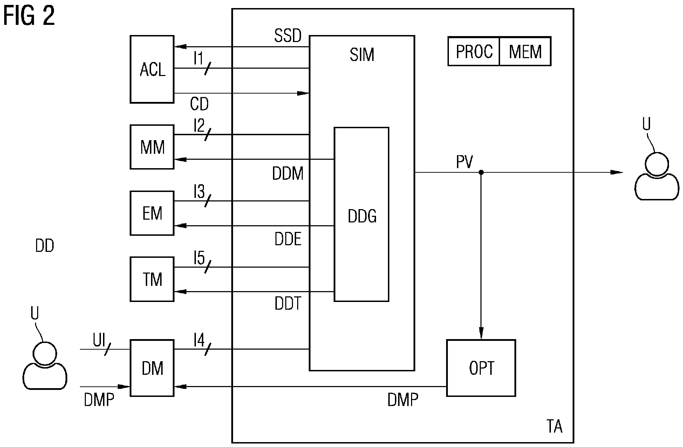

Figur 2 zeigt in schematischer Darstellung eine erfindungsgemäße Testanordnung TA zum Testen einer autonomen Verhaltenssteuerung ACL für das autonome technische System ATS. Insofern in Figur 2 die gleichen Bezugszeichen wie in Figur 1 verwendet werden, bezeichnen diese Bezugszeichen die gleichen oder korrespondierende Entitäten, die insbesondere wie oben beschrieben, implementiert oder ausgestaltet sein können.

Die Testanordnung TA verfügt über einen oder mehrere Prozessoren PROC zum Ausführen von Verfahrensschritten der Testanordnung TA sowie über einen oder mehrere mit dem Prozessor PROC gekoppelte Speicher MEM zum Speichern der von der Testanordnung TA zu verarbeitenden Daten.

Die Testanordnung TA verfügt weiterhin über eine erste Schnittstelle I1 zum Ankoppeln der autonomen Verhaltenssteuerung ACL sowie über weitere individuelle Schnittstellen 12,...,15 zum Ankoppeln von für eine Simulation des autonomen technischen Systems ATS zu nutzenden Modellen MM, EM, TM und DM unterschiedlichen Typs. Diese Modelle modellieren jeweils spezifische verhaltensrelevante Aspekte des autonomen technischen Systems ATS, seiner Verwendung und seiner Umgebung. Die Schnittstellen I1,...,I5 sind vorzugsweise unabhängig oder weitgehend unabhängig von einer internen Implementierung der autonomen Verhaltenssteuerung ACL sowie der Modelle MM, EM, TM und DM ausgestaltet. Die vorstehenden Module ACL, MM, EM, TM und DM können somit über die Schnittstellen I1,...,I5 jeweils als separates Blackbox-Modul angesteuert werden. Dies erlaubt es, Blackbox-Module verschiedener Hersteller zu verwenden und auf einfache Weise auszutauschen.

Die Module ACL, MM, EM, TM und DM werden z.B. von einer Datenbank eingelesen und über die Schnittstellen I1,...,I5 an die Testanordnung TA angekoppelt. Im Einzelnen:
Über die erste Schnittstelle I1 wird die autonome Verhaltenssteuerung ACL als Blackbox-Steuerung, vorzugsweise unabhängig von ihrer internen Implementierung an die Testanordnung TA angekoppelt. Die Testanordnung TA fingiert dabei gegenüber der angekoppelten autonomen Verhaltenssteuerung ACL eine Ankopplung und einen Betrieb des autonomen technischen Systems ATS. Somit muss die autonome Verhaltenssteuerung ACL keinen spezifischen Testmodus implementieren, sondern kann so reagieren, wie sie im Normalbetrieb des autonomen technischen Systems ATS reagieren würde.

Über die zweite Schnittstelle I2 wird das Maschinenmodell MM zur physikalischen Simulation des autonomen technischen Systems ATS angekoppelt. Das Maschinenmodell modelliert bzw. spezifiziert eine Geometrie, eine Kinematik und/oder eine Dynamik des autonomen technischen Systems ATS und insbesondere seine Aktoren ACT und seine Sensorik S sowie deren Messmodelle.

Über die dritte Schnittstelle I3 wird das Umgebungsmodell EM an die Testanordnung TA angekoppelt. Das Umgebungsmodell EM modelliert, spezifiziert und/oder repräsentiert eine Umgebung des autonomen technischen Systems ATS und insbesondere eine Geometrie dieser Umgebung. Vorzugsweise werden auch durch das autonome technische System ATS zu manipulierende oder zu handhabende Objekte, die sich in der Umgebung befinden oder Teile der Umgebung sind, durch das Umgebungsmodell EM modelliert.

Über die vierte Schnittstelle I4 wird das Störungsmodell DM an die Testanordnung TA angekoppelt. Das Störungsmodell DM modelliert auf systematische Weise potenzielle Störungen im Betrieb des autonomen technischen Systems ATS. Als Störungen können insbesondere Abweichungen von einem geplanten oder erwarteten Soll-Betriebsablauf, Abweichungen von einer Soll-Funktion, Abweichungen von einer Soll-Wirkung, Abweichungen von vorgesehenen Betriebsmitteln und/oder Abweichungen von Randbedingungen oder anderen Rahmenbedingungen modelliert werden.

Insbesondere werden durch das Störungsmodell DM potenzielle Störungen in der Umgebung des autonomen technischen Systems ATS modelliert. Dies können insbesondere statische oder dynamische Hindernisse, in der Umgebung auftauchende Maschinen oder Menschen, Variationen einer Positionierung von zu bearbeitenden oder zu handhabenden Objekten, Variationen oder Deformationen dieser Objekte, Variationen von Beleuchtungsbedingungen, Wettervariationen und/oder Temperaturwechsel sein. So können in die Umgebung des autonomen technischen Systems ATS simulativ mehrere Personen eingefügt werden, die sich gemäß einem vorgegebenen Bewegungsprofil bewegen. Darüber hinaus kann eine Umgebungsbeleuchtung hinsichtlich Intensität, Farbe oder Einfallswinkel variiert werden, um z.B. optische Sensoren des autonomen technischen Systems ATS zu testen. Das Störungsmodell DM kann weiterhin Störungen des autonomen technischen Systems ATS, insbesondere seiner Sensorik S und seiner Aktoren ATS modellieren. Auf diese Weise können Sensordefekte, Fehljustierungen, Fehlmessungen oder andere Ungenauigkeiten systematisch modelliert werden. Das Störungsmodell DM kann spezifisch für ein jeweiliges autonomes technisches System ATS oder für eine oder mehrere seiner Komponenten und/oder umgebungsspezifisch implementiert sein. Alternativ oder zusätzlich kann das Störungsmodell DM auch maschinenübergreifende, komponentenübergreifende oder umgebungsübergreifende Störungen modellieren.

Über die fünfte Schnittstelle I5 wird das Aufgabenmodell TM an die Testanordnung TA gekoppelt. Das Aufgabenmodell TM spezifiziert oder modelliert eine Aufgabenstellung oder eine Beschreibung von durch das autonome technische System ATS auszuführenden Aufgaben. Das Aufgabenmodell TM kann auch aufgabenrelevante, vom autonomen technischen Systems ATS zu bearbeitende oder zu handhabende Objekte modellieren. Insbesondere kann das Aufgabenmodell TM eine sogenannte Bill-of-Materials (BOM) und/oder eine sogenannte Bill-of-Process (BOP) umfassen. Das Störungsmodell DM modelliert vorzugsweise auch potenzielle Störungen der Aufgabenstellung für das autonome technische System ATS, z.B. eine kurzfristige Änderung der Aufgabe aufgrund eines priorisierten Ereignisses.

Im vorliegenden Ausführungsbeispiel wird die autonome Verhaltenssteuerung ACL über die erste Schnittstelle I1 insbesondere an einen Simulator SIM der Testanordnung TA angekoppelt. Auch die spezifischen Modelle MM, EM, DM und TM werden über die Schnittstellen I2, I3, I4 und I5 an den Simulator SIM angekoppelt. Die vorstehenden Modelle MM, EM, DM und TM werden jeweils durch eine oder mehrere Datenstrukturen implementiert, die Eigenschaften, Fähigkeiten, Einstellwerte, eine Geometrie, eine Kinematik, eine Dynamik und/oder andere Modellparameter des autonomen technischen Systems ATS, seiner Umgebung, der potenziellen Störungen bzw. der Aufgabenstellung spezifizieren und/oder quantifizieren.

Die Modelle MM, EM, TM und DM werden jeweils als separates Modul an die Testanordnung TA angekoppelt, wobei die Schnittstellen I2, I3, I4 und I5 jeweils unabhängig von internen Modelldetails implementiert sind. Dies erlaubt es, das Maschinenmodell MM durch andere Maschinenmodelle, das Umgebungsmodell EM durch andere Umgebungsmodelle, das Aufgabenmodell TM durch andere Aufgabenmodelle und das Störungsmodell DM durch andere Störungsmodelle auf einfache Weise auszutauschen. Hierdurch ist die Testanordnung TA flexibel einsetzbar und für ganz unterschiedliche technische Systeme ATS und Umgebungen nutzbar. Insbesondere können verschiedene technische Systeme durch einfachen Austausch des Maschinenmodells MM in vergleichender Weise getestet werden. Durch Austausch des Umgebungsmodells EM, des Aufgabenmodells TM bzw. des Störungsmodells DM können die Tests zudem auf einfache Weise auf verschiedene Umgebungen, verschiedene Aufgabenstellungen bzw. verschiedene Störeinflüsse bezogen werden. Darüber hinaus sind die Modelle MM, EM, TM und DM für unterschiedliche Testszenarien wiederverwendbar.

Das Störungsmodell DM weist weiterhin eine Benutzerschnittstelle UI zu einem oder mehreren Benutzern U auf. Die Benutzerschnittstelle UI dient zum Konfigurieren, zum Erweitern und/oder zum zumindest teilweisen Austauschen des Störungsmodells DM. Die Benutzerschnittstelle UI kann insbesondere eine Netzwerkschnittstelle, z.B. zum Internet umfassen. Auf diese Weise kann das Störungsmodell DM durch ein sogenanntes Gamification-Verfahren optimiert werden. Die Optimierung ist hierbei als Teil eines Spiels organisiert, wobei sich eine Belohnung oder Motivation im Spiel an einem gewünschten Optimierungserfolg orientiert. Die Benutzerschnittstelle UI kann weiterhin eine Störungsmodellschnittstelle zum zumindest teilweisen Ersetzen des Störungsmodells DM umfassen. Alternativ oder zusätzlich kann für das Störungsmodell DM eine andere Konfigurationsschnittstelle vorgesehen sein, über die eine Konfiguration oder Optimierung durch ein Maschinenlernsystem, insbesondere mittels eines neuronalen Netzes vorgenommen wird.

Im vorliegenden Ausführungsbeispiel wird die Testanordnung TA und insbesondere das Störungsmodell DM nach einer Vorkonfiguration durch einen Benutzer U, in der die Modelle MM, EM, TM und DM selektiert und angekoppelt sowie ein Testszenario ausgewählt wird, in einer Initialisierungsphase initialisiert. In der Initialisierungsphase ermittelt die Testanordnung TA anhand des Störungsmodells DM, welche Störungen im gewählten Testszenario inwieweit anwendbar sind. Dabei können potenzielle Störungen in der Umgebung des autonomen technischen Systems ATS anhand des Umgebungsmodells EM, potenzielle Störungen des autonomen technischen Systems ATS anhand des Maschinenmodells MM und/oder potenzielle Störungen einer Aufgabenstellung anhand des Aufgabenmodells TM ermittelt werden. Abhängig davon werden Angaben über manipulierbare Störungsmodellparameter DMP vom Störungsmodell DM über die Benutzerschnittstelle UI zum Benutzer U übermittelt. Insbesondere werden Angaben übermittelt, welche Störungsmodellparameter DMP verfügbar sind und in wieweit diese variierbar sind. Die Störungsmodellparameter DMP spezifizieren Störungen des autonomen technischen Systems ATS, insbesondere seiner Sensorik S und der Aktoren ACT, Störungen in der Umgebung des autonomen technischen Systems ATS sowie Störungen der Aufgabenstellung. Abhängig von diesen Angaben wird das Störungsmodell DM vom Benutzer U durch Eingabe oder Modifikation der Störungsmodellparameter DMP über die Benutzerschnittstelle UI aktiv konfiguriert. Alternativ oder zusätzlich können die Störungsmodellparameter DMP durch ein Gamification-Verfahren oder mittels eines Maschinenlernsystems, wie oben erwähnt, modifiziert werden.

Zur Initialisierung der autonomen Verhaltenssteuerung ACL werden anhand des Maschinenmodells MM Angaben über durch die autonome Verhaltenssteuerung ACL steuerbare Aktoren, hier ACT, des autonomen technischen Systems ATS ermittelt und zur autonomen Verhaltenssteuerung ACL übermittelt. Darüber hinaus werden mittels des Maschinenmodells MM Angaben über die Sensorik S des autonomen technischen Systems ATS zur autonomen Verhaltenssteuerung ACL übertragen.

Nach der Initialisierungsphase wird ein Betriebsverhalten des autonomen technischen Systems ATS bei vorgegebener Aufgabenstellung unter dem Einfluss von Störungen durch den Simulator SIM der Testanordnung TA simuliert. Der Simulator SIM implementiert eine physikalische Simulationsumgebung für das autonome technische System ATS. Der Simulator SIM greift hierfür über die Schnittstellen I1, I2, I3, I4 und I5 auf die autonome Verhaltenssteuerung ACL, das Maschinenmodell MM, das Umgebungsmodell EM, das Störungsmodell DM und das Aufgabenmodell TM zu.

Der Simulator SIM simuliert anhand des Maschinenmodells MM ein physikalisches Verhalten des autonomen technischen Systems ATS, insbesondere ein physikalisches Verhalten seiner Sensorik S und seiner Aktoren ACT. Weiterhin simuliert der Simulator SIM anhand des Umgebungsmodells EM eine Umgebung des autonomen technischen Systems ATS, anhand des Aufgabenmodells TM eine Aufgabenerfüllung oder Aufgabenstellung und anhand des Störungsmodells DM potenzielle Störungen im aktuellen Testszenario. Im Rahmen der Simulation wird von den Modellen MM, EM, TM und DM unter anderem jeweils ein Strom von Steuerereignissen zum Simulator SIM übermittelt, der infolgedessen Daten über eine simulierte Reaktion des autonomen technischen Systems ATS zu diesen Modellen überträgt.

Zur Berücksichtigung von Störungen des Betriebsablaufs werden mittels des konfigurierten Störungsmodells DM durch einen Stördatengenerator DDG spezifische Stördaten DDM für das Maschinenmodell MM, spezifische Stördaten DDE für das Umgebungsmodell EM und spezifische Stördaten DDT für das Aufgabenmodell TM generiert. Die Generierung der Stördaten DDM, DDE und DDT erfolgt hierbei in systematischer, modellgetriebener Weise. Der Stördatengenerator DDG ist im vorliegenden Ausführungsbeispiel als Komponente des Simulators SIM implementiert. Alternativ oder zusätzlich kann der Stördatengenerator DDG auch ganz oder teilweise extern zum Simulator SIM angeordnet sein. Die Stördaten DDM, DDE und DDT umfassen jeweils spezifische Störungen quantifizierende Daten, Variablenwerte, oder Parameterwerte. Alternativ oder zusätzlich können die Stördaten DDM, DDE und DDT auch Simulationsmodelle oder Simulationsteilmodelle zur Simulation spezifischer Störungen enthalten. Insbesondere können die Stördaten DDM, DDE und DDT auch zufallsbasierte Daten umfassen.

Durch den Stördatengenerator DDG werden die Stördaten DDM zum Maschinenmodell MM, die Stördaten DDE zum Umgebungsmodell EM und die Stördaten DDT zum Aufgabenmodell TM übermittelt. Die Modelle MM, EM und TM werden anhand der jeweils übermittelten Stördaten DDM, DDE bzw. DDT jeweils störungsspezifisch modifiziert.

Zur Simulation des störungsspezifischen oder störungsindizierten Verhaltens des autonomen technischen Systems ATS werden durch den Simulator SIM anhand des modifizierten Umgebungsmodells EM und des modifizierten Maschinenmodells MM umgebungsspezifisch und maschinenspezifisch simulierte Sensordaten SSD generiert und zur autonomen Verhaltenssteuerung ACL übertragen. Die autonomen Verhaltenssteuerung ACL wertet die simulierten Sensordaten SSD aus und entscheidet abhängig davon und anhand des modifizierten Aufgabenmodells TM über vom autonomen technischen System ATS auszuführende Aktionen. Abhängig von den auszuführenden Aktionen generiert die autonome Verhaltenssteuerung ACL dann Steuerdaten CD, durch die die Aktoren ACT des autonomen technischen Systems ATS veranlasst würden, diese Aktionen auszuführen. Die Steuerdaten CD werden von der autonomen Verhaltenssteuerung ACL zum Simulator SIM übertragen. Abhängig davon simuliert der Simulator SIM mittels des modifizierten Maschinenmodells MM und vorzugsweise mittels des modifizierten Umgebungsmodells EM ein durch die empfangenen Steuerdaten CD induziertes Betriebsverhalten des autonomen technischen Systems ATS. Darüber hinaus bewertet der Simulator SIM das simulierte Betriebsverhalten und generiert abhängig davon Performanzwerte PV, die das simulierte Betriebsverhalten in vorgegebener Weise quantifizieren.

Die Performanzwerte PV können hierbei insbesondere einen Durchsatz, eine Betriebsgeschwindigkeit, einen Ressourcenverbrauch, Aktionszykluszeiten, eine Produktqualität, eine Genauigkeit, eine Aufgabenerfüllung, eine Betriebstemperatur und/oder einen Verschleiß, insbesondere in Abhängigkeit von den generierten Störungen quantifizieren.

Die Performanzwerte PV werden durch den Simulator SIM als Testergebnisse ausgegeben. Vorzugsweise werden die Performanzwerte PV in Zuordnung zu den der Simulation zugrundeliegenden Störungen bzw. Stördaten ausgegeben. Auf diese Weise kann ein Einfluss einer jeweiligen Störung auf eine Performanz des autonomen technischen Systems ATS besonders leicht erkannt werden.

Zur besseren Ausschöpfung der Testszenarien verfügt die Testanordnung TA weiterhin über ein Optimierungsmodul OPT, dem die vom Simulator SIM ermittelten Performanzwerte PV zugeführt werden. Das Optimierungsmodul OPT generiert abhängig von den zugeführten Performanzwerten PV Störungsmodellparameter DMP und übermittelt diese zum Störungsmodell DM, um dieses im Rahmen eines Optimierungsverfahrens zu modifizieren. Durch die Modifizierung des Störungsmodells DM werden die vom Störungsmodell DM modellierten Störungen variiert. Entsprechend generiert der Stördatengenerator DDG mittels des modifizierten Störungsmodells DM modifizierte Stördaten DDM, DDE und DDT. Mittels dieser modifizierten Stördaten DDM, DDE und DDT werden - wie oben beschrieben - das Maschinenmodell MM, das Umgebungsmodell EM und das Aufgabenmodell TM erneut modifiziert. Entsprechend wird ein neues Betriebsverhalten des autonomen technischen Systems ATS mittels der erneut modifizierten Modelle MM, EM und TM simuliert sowie daraus resultierende Performanzwerte PV durch den Simulator SIM ermittelt. Die erneut ermittelten Performanzwerte PV werden zum Optimierungsmodul OPT übermittelt. Der vorstehende Ablauf wird iterativ ausgeführt, wobei das Störungsmodell DM vielfach modifiziert wird. Dabei werden die Störungsmodellparameter DMP durch das Optimierungsmodul OPT abhängig von den jeweils zugeführten Performanzwerten PV iterativ dahingehend optimiert, dass eine resultierende Performanz des simulierten autonomen technischen Systems ATS verringert wird. Zur Durchführung einer solchen Optimierung sind eine Vielzahl von numerischen Optimierungsverfahren verfügbar. Vorzugsweise kann ein Maschinenlernsystem, insbesondere ein neuronales Netz und/oder ein Reinforcement-Learning-Verfahren zur Optimierung verwendet werden.

Auf die vorstehende Weise können gezielt Störungen oder Aufgabenstellungen ermittelt werden, bei denen das autonome technische System ATS gemäß der Simulation versagen würde. Darüber hinaus kann ein Maß für eine Robustheit der autonomen Verhaltenssteuerung ACL und/oder ein Worst-Case-Szenario abgeleitet werden. Als Testergebnisse können insbesondere eine statistische Verteilung von Performanzwerten, ein extremer Performanzwert mit zugehörigem Betriebsverhalten und/oder zugehöriger Störungsangabe, eine Korrelation zwischen Störungen und Performanzwerten und/oder eine Wahrscheinlichkeit einer Aufgabenerfüllung oder eines Versagens des technischen Systems ATS ausgegeben werden.

Mittels der erfindungsgemäßen Testanordnung TA können potenzielle Nutzer des autonomen technischen Systems ATS vorab dessen Aufgabenerfüllung sowie dessen Robustheit gegenüber Störungen simulativ testen. Darüber hinaus können Störungen des autonomen technischen Systems ATS, Störungen in seiner Umgebung und/oder Störungen seiner Aufgabenstellung identifiziert werden, die zu einer Verringerung der Performanz oder zu einem Ausfall führen können.

Die Testanordnung TA kann auch bei einer Konstruktion eines autonomen technischen Systems genutzt werden, um dessen Verhalten und dessen Robustheit gegenüber Störungen bereits in der Designphase zu verifizieren. Aufgrund der Modularität der individuellen Modelle MM, EM, TM und DM können die Testszenarien auf einfache Weise an unterschiedliche Ausgestaltungen des zu testenden technischen Systems, an unterschiedliche Umgebungsbedingungen, an unterschiedliche Aufgabenstellungen sowie an unterschiedliche Störeinflüsse angepasst werden. Die spezifischen Testergebnisse können dann schon während der Designphase dazu dienen, das zu konstruierende technische System in gezielter Weise robust gegenüber spezifischen Störungen auszulegen.

## Patentansprüche

1. Computerimplementiertes Verfahren zum Testen einer autonomen Verhaltenssteuerung (ACL) für ein technisches System (ATS), wobei
a) ein Maschinenmodell (MM) zur physikalischen Simulation des technischen Systems (ATS), ein eine Umgebung des technischen Systems (ATS) modellierendes Umgebungsmodell (EM) sowie ein potenzielle Störungen in der Umgebung modellierendes Störungsmodell (DM) eingelesen werden,
b) mittels des Störungsmodells (DM) Stördaten (DDE, DDM, DDT) generiert werden und das Umgebungsmodell (EM) abhängig von den Stördaten (DDE, DDM, DDT) modifiziert wird,
c) mittels des modifizierten Umgebungsmodells (EM) und des Maschinenmodells (MM) umgebungsspezifisch simulierte Sensordaten (SSD) des technischen Systems (ATS) generiert werden,
d) durch die autonome Verhaltenssteuerung (ACL) abhängig von den simulierten Sensordaten (SSD) Steuerdaten (CD) für das technische System (ATS) generiert werden,
e) mittels des Maschinenmodells (MM) ein durch die Steuerdaten (CD) induziertes Betriebsverhalten des technischen Systems (ATS) simuliert wird, und
f) ein das Betriebsverhalten quantifizierender Performanzwert (PV) ermittelt und als Testergebnis ausgegeben wird.

2. Verfahren nach Anspruch 1, **dadurch gekennzeichnet,**
**dass** das Störungsmodell (DM) potenzielle Störungen des technischen Systems (ATS) modelliert,
**dass** das Maschinenmodell (MM) abhängig von den Stördaten (DDM, DDE, DDT) modifiziert wird, und
**dass** mittels des modifizierten Maschinenmodells (MM) die simulierten Sensordaten (SSD) generiert und/oder das Betriebsverhalten simuliert wird.

3. Verfahren nach Anspruch 2, **dadurch gekennzeichnet,**
**dass** abhängig von den Stördaten (DDM, DDE, DDT) ein Verhalten eines Sensors (S) und/oder eines Aktors (ACT) des technischen Systems (ATS) im Maschinenmodell (MM) modifiziert wird.

4. Verfahren nach einem der vorhergehenden Ansprüche, **dadurch gekennzeichnet,**
**dass** mehrere Modifikationen des Störungsmodells (DM) generiert oder eingelesen werden,
**dass** der Performanzwert (PV) für eine jeweilige Modifikation des Störungsmodells (DM) ermittelt wird, und
**dass** eine Modifizierung des Störungsmodells (DM) anhand des jeweiligen Performanzwertes (PV) dahingehend optimiert wird, dass eine resultierende Performanz des technischen Systems (ATS) verringert wird.

5. Verfahren nach Anspruch 4, **dadurch gekennzeichnet,**
**dass** zur Modifizierung des Störungsmodells (DM):
- Störungsmodellparameter (DMP) über eine Benutzerschnittstelle (UI) eingelesen werden,
- gemessene oder vorgegebene Störungsmodellparameter (DMP) aus einer Datenbank eingelesen werden,
- das Störungsmodell (DM) durch ein anderes, über eine Störungsmodellschnittstelle eingelesenes Störungsmodell zumindest teilweise ersetzt wird,
- Störungsmodellparameter (DMP) mittels eines Gamification-Verfahrens variiert werden und/oder
- Störungsmodellparameter (DMP) mittels eines maschinellen Lernverfahrens variiert werden.

6. Verfahren nach einem der vorhergehenden Ansprüche, **dadurch gekennzeichnet,**
**dass** ein eine Aufgabenstellung für das technische System (ATS) spezifizierendes Aufgabenmodell (TM) eingelesen wird, dass das Aufgabenmodell (TM) abhängig von den Stördaten (DDT, DDM, DDE) modifiziert wird, und
**dass** die Steuerdaten (CD) mittels des modifizierten Aufgabenmodells (TM) generiert werden.

7. Verfahren nach einem der vorhergehenden Ansprüche, **dadurch gekennzeichnet,**
**dass** anhand von für unterschiedliche Stördaten (DDM, DDE, DDT) ermittelten Performanzwerten (PV)
- eine statistische Verteilung der Performanzwerte (PV),
- ein extremer Performanzwert, ein zugehöriges Betriebsverhalten und/oder eine zugehörige Störungsangabe,
- eine Korrelation zwischen Störungen und Performanzwerten (PV) und/oder
- eine Wahrscheinlichkeit einer Aufgabenerfüllung oder eines Ausfalls des technischen Systems (ATS)
ermittelt und als Testergebnis ausgegeben werden.

8. Testanordnung (TA) zum Testen einer autonomen Verhaltenssteuerung (ACL) für ein technisches System (ATS), mit
a) einer ersten Schnittstelle (I1) zum Ankoppeln der autonomen Verhaltenssteuerung (ACL),
b) einer zweiten Schnittstelle (I2) zum Ankoppeln eines Maschinenmodells (MM) zur physikalischen Simulation des technischen Systems (ATS),
c) einer dritten Schnittstelle (I3) zum Ankoppeln eines, eine Umgebung des technischen Systems (ATS) modellierenden Umgebungsmodells (EM),
d) einer vierten Schnittstelle (I4) zum Ankoppeln eines potenzielle Störungen in der Umgebung modellierenden Störungsmodells (DM),
e) einem Stördatengenerator (DDG) zum Generieren von Stördaten (DDM, DDE, DDT) mittels des Störungsmodells (DM) und zum Modifizieren des Umgebungsmodells (EM) abhängig von den Stördaten (DDM, DDE, DDT), und
f) einem Simulator (SIM)
- zum umgebungsspezifischen Simulieren und Generieren von Sensordaten (SSD) des technischen Systems (ATS) mittels des modifizierten Umgebungsmodells (EM) und des Maschinenmodells (MM),
- zum Empfangen von durch die autonome Verhaltenssteuerung (ACL) abhängig von den simulierten Sensordaten (SSD) generierten Steuerdaten (CD) für das technische System (ATS),
- zum Simulieren eines durch die Steuerdaten (CD) induzierten Betriebsverhaltens des technischen Systems (ATS) mittels des Maschinenmodells (MM), sowie
- zum Ermitteln und Ausgeben eines das Betriebsverhalten quantifizierenden Performanzwertes (PV).

9. Computerprogrammprodukt eingerichtet zum Ausführen eines Verfahrens nach einem der Ansprüche 1 bis 7.

10. Computerlesbare Speichermedium mit einem Computerprogrammprodukt nach Anspruch 9.
